# EUROPÄISCHE PATENTSCHRIFT

(11) **EP 2 897 839 B1**
(45) Veröffentlichungstag und Bekanntmachung des Hinweises auf die Patenterteilung: **27.07.2016**
(21) Anmeldenummer: 13752590.3
(22) Anmeldetag: 19.08.2013
(51) Int. Cl.: B60R 1/02, B60R 1/07

(54) **VERFAHREN UND VORRICHTUNG ZUR VERSTELLUNG EINES SPIEGELS FÜR EIN KRAFTFAHRZEUG**
METHOD AND DEVICE FOR ADJUSTING A MIRROR FOR A MOTOR VEHICLE
PROCÉDÉ ET DISPOSITIF DE RÉGLAGE D'UN RÉTROVISEUR DE VÉHICULE AUTOMOBILE

(30) Priorität: 21.09.2012 DE 102012018742
(43) Veröffentlichungstag der Anmeldung: 29.07.2015
(73) Patentinhaber: Audi AG, 85045 Ingolstadt (DE)
(72) Erfinder: BOUAZIZ, Tahar, 85055 Ingolstadt (DE)
(74) Vertreter: Brandt, Kai
(86) Internationale Anmeldenummer: PCT/EP2013/002485
(87) Internationale Veröffentlichungsnummer: WO 2014/044341

(56) Entgegenhaltungen:
- EP-A2- 1 574 393
- DE-U1- 20 010 607

## Beschreibung

Die Erfindung betrifft ein Verfahren zur Verstellung eines Spiegels für ein Kraftfahrzeug der im Oberbegriff des Patentanspruchs 1 angegebenen Art und eine Vorrichtung zur Verstellung eines Spiegels für ein Kraftfahrzeug der im Oberbegriff des Patentanspruchs 5 angegebenen Art.

DE 200 10 607 U1 offenbart ein Verfahren nach dem Oberbegriff des Anspruchs 1, sowie eine Vorrichtung nach dem Oberbegriff des Anspruchs 5.

Aus der DE 10 2005 030 968 A1 ist ein Verfahren zur automatischen Spie-gelausrichtung bei einem Fahrzeug bekannt. Dabei wird ein Verfahren offenbart, welches eine automatische Ausrichtung eines Spiegels bei einem Fahrzeug vorsieht, indem eine Blickrichtung eines Fahrers ausgewertet wird. Im Zusammenhang mit einer Auswertung einer Spiegelebene über eine Zeitdauer wird dann elektrisch eine dynamische Verstellung des entsprechenden Spiegels vorgenommen. Da die Ausrichtung der Spiegel in einem Fahrzeug jedoch hochindividuell und somit von jedem Fahrer anders wahrgenommen wird, kann eine vollautomatische Ausrichtung der Spiegel nicht jede wunschgemäße und somit optimale Ausrichtung gewährleisten. Bisweilen kommt es demzufolge zu Verstellungen, die nicht als optimal wahrgenommen werden.

Die Aufgabe der vorliegenden Erfindung ist es somit, ein Verfahren sowie eine Vorrichtung zur Verstellung eines Spiegels für ein Kraftfahrzeug zu schaffen, das ein besonders einfaches und dennoch individuelles Verstellen der Spiegel gewährleistet.

Diese Aufgabe wird erfindungsgemäß durch ein Verfahren zur Verstellung eines Spiegels für ein Kraftfahrzeug mit den Merkmalen des Patentanspruchs 1 und durch eine Vorrichtung mit den Merkmalen des Patentanspruchs 5 gelöst.

Weitere vorteilhafte Ausgestattungen der Erfindung sind in den abhängigen Ansprüchen angegeben.
Die vorliegende Erfindung basiert auf der Erkenntnis, dass ein automatisches Verstellen zwar zu einem guten Resultat führen kann, nicht aber - aufgrund von sehr individuellen Wünschen des Fahrers - in jedem Fall als optimal wahrgenommen wird.

Um ein Verfahren zur Verstellung eines Spiegels für ein Kraftfahrzeug zu schaffen, welches besonders einfach und dabei dennoch ein individuelles Verstellen erlaubt, ist es vorgesehen, zunächst die Blickrichtung eines Fahrers mittels wenigstens einer Blickerfassungseinrichtung zu erfassen. Es wird überprüft, ob die Blickrichtung des Fahrers auf den zu verstellenden Spiegel gerichtet ist. Dieser zu verstellende Spiegel wird erfindungsgemäß erst dann verstellt, wenn zudem eine Betätigung eines Bedienelements zum Verstellen des Spiegels erfasst wird.

Auf diese Weise ist eine besonders einfache und damit komfortable Verstellung des Spiegels gewährleistet und gleichzeitig hat der Fahrer eine eigenständige Kontrolle über das Verstellen, um seine spezielle Verstellung des Spiegels herbei zu führen. Auch kann auf diese Weise mit nur einem Bedienelement die Verstellung aller Spiegel im Fahrzeug erfolgen, was ebenfalls zu einer besonders einfachen und damit komfortablen Verstellung der Spiegel führt.

In einer weiteren Ausgestaltung der Erfindung hat es sich als vorteilhaft erwiesen, dass die Blickrichtung des Fahrers durch eine Blickerfassungseinrichtung, welche an dem Spiegel angeordnet ist, erfasst wird. Somit kann eine besonders gezielte Erfassung der Blickrichtung des Fahrers gewährleistet werden, was wiederum zu einer besonders guten Verstellung des Spiegels führt.

In diesem Zusammenhang hat es sich in einer weiteren Variante als vorteilhaft erwiesen, dass die Blickrichtung des Fahrers durch eine Kameraeinrichtung erfasst wird. Derartige Systeme sind bereits in der Praxis bewährt und gelten als besonders zuverlässig und sicher bei der Erfassung der Blickrichtung des Fahrers.

Auch hat es sich in einer weiteren Ausführungsvariante als vorteilhaft erwiesen, dass die Blickrichtung des Fahrers durch mehrere Blickerfassungseinrichtungen erfasst wird. Aufgrund einer Auswertung von mehren Signalen der jeweiligen Blickerfassungseinrichtungen über die Blickrichtung des Fahrers ist somit die Erfassung der Blickrichtung noch genauer und zuverlässiger möglich, so dass eine noch bessere Verstellung des Spiegels möglich ist.

Um eine Vorrichtung zur Verstellung eines Spiegels für ein Kraftfahrzeug zu schaffen, welche wenigstens eine Blickerfassungseinrichtung umfasst, welche dazu ausgelegt ist, eine Blickrichtung eines Fahrers zu erfassen und zu überprüfen, ob die Blickrichtung des Fahrers auf den Spiegel gerichtet ist, und eine Steuereinrichtung umfasst, welche dazu ausgelegt ist, den in der Blickrichtung des Fahrers befindlichen Spiegel zu verstellen, ist es erfindungsgemäß vorgesehen, dass die Vorrichtung eine Steuereinrichtung umfasst, welche dazu ausgelegt ist, zu erfassen, ob zudem das Bedienelement zum Verstellen des Spiegels betätigt worden ist, und nur in diesem Fall den Spiegel zu verstellen.

Eine derartige Vorrichtung gewährleistet somit eine besonders leichte und damit komfortable Verstellung des gewünschten Spiegels. Gleichzeitig hat der Fahrer eine eigenständige Kontrolle über das Verstellen, um seine spezielle Verstellung des gewünschten Spiegels herbei zu führen. Auch kann auf diese Weise mit nur einem Bedienelement die Verstellung aller Spiegel im Fahrzeug erfolgen, was ebenfalls zu einer besonders leichten und damit komfortablen Verstellung der Spiegel führt.

Die für das erfindungsgemäße Verfahren beschriebenen Vorteile und bevorzugten Ausführungsformen gelten auch für die erfindungsgemäße Vorrichtung und umgekehrt. Insbesondere weist die Vorrichtung Mittel auf, mit denen die Verfahrensschritte durchführbar sind.

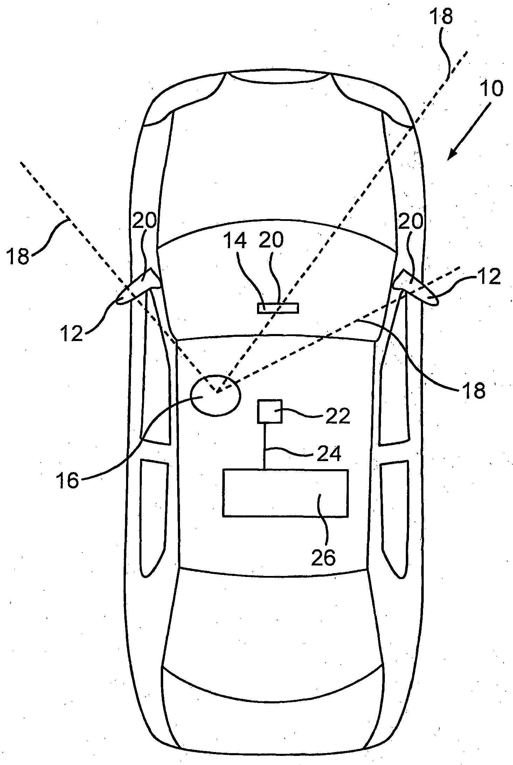

Weitere Vorteile, Merkmale und Einzelheiten der Erfindung ergeben sich aus der nachfolgenden Beschreibung bevorzugter Ausführungsbeispiele sowie anhand der Zeichnung.

Dabei zeigt die einzige Figur eine schematische Draufsicht auf ein Kraftfahrzeug mit jeweiligen Seitenspiegeln und einem Rückspiegel.

Zu erkennen sind jeweilige Außenspiegel 12 und ein Rückspiegel 14.
In Höhe einer Position eines Vordersitzes ist auf einer linken Seite eines Innenraums des Kraftfahrzeugs 10 eine mögliche Sitzposition 16 eines Fahrers zu erkennen. In Richtung der Außenspiegel 12 bzw. in Richtung des Rückspiegels 14 verlaufen mögliche Blickrichtungen 18 des Fahrers: In einer Ausführungsvariante können jeweilige Blickerfassungseinrichtungen 20 in die Spiegel 12, 14 integriert sein, wobei diese Blickerfassungseinrichtungen 20 in der Figur selbst nicht weiter dargestellt sind. In einer Ausführungsvariante ist es vorstellbar, dass mittels einer permanenten Sensorik als Bestandteil der Blickerfassungseinrichtung 20 die Blickrichtung 18 des Fahrers ermittelt wird. Auch ist es vorstellbar, dass die Blickerfassungsrichtung 20 eine Infraroteinrichtung aufweist, mittels welcher eine Blickrichtung 18 auch im Dunkeln ermittelt wird.

Ferner ist im Bereich der Sitzposition 16 ein Bedienelement 22 zu erkennen, welches über eine Leitung 24 mit einer Steuereinrichtung 26 gekoppelt ist. Es ist ebenfalls vorgesehen, dass diese Steuereinrichtung 26 sowohl mit den jeweiligen Blickerfassungseinrichtungen 20 als auch mit den entsprechenden Vorrichtungen zur Verstellung der Spiegel 12, 14 gekoppelt ist. Das Bedienelement 22 kann in einer Ausführungsvariante beispielsweise als 4-Wege-Joystick ausgebildet sein, womit dann alle Spiegel 12, 14 in Abhängigkeit der erfassten Blickrichtung 18 des Fahrers verstellbar sind. Hier ist es ebenfalls vorstellbar, dass mittels einer permanenten Sensorik als Bestandteil des Bedienelements 22 eine mögliche Bedienung des Bedienelements 22 registriert wird. Erst wenn der Fahrer einen der Spiegel 12, 14 fokussiert, dieses von der Steuereinrichtung 26 über die Blickerfassungseinrichtung 20 registriert wird und zusätzlich die Bedienung des Bedienelements 22 registriert wird, erfolgt eine Verstellung des gewünschten Spiegels 12, 14.

Die Erfidung sieht vor, dass zunächst nur das Signal der Blickerfassungseinrichtung 20 die Steuereinheit 26 erreicht und daraufhin eine Abfrage über eine mögliche Bewegung des Bedienelements 22 erfolgt. Dementsprechend würde erst nachdem diese Abfrage über eine mögliche Bewegung des Bedienelements 22 positiv ist, eine vom Fahrer gewünschte Verstellung des Spiegels 12 erfolgen.

Nachfolgend wird ein Ausführungsbeispiel eines nicht erfindungsgemäßen Verfahrens zur Verstellung der Spiegel 12, 14 für ein Kraftfahrzeug beschrieben.

Richtet der Fahrer seine Blickrichtung 18 beispielsweise auf den linken Außenspiegel 12, so erkennt die Blickerfassungseinrichtung 20 diesen Zustand. Entsprechend wird ein Signal an die Steuereinheit 26 gesendet. Es ist vorstellbar, dass gleichzeitig über die permanente Sensorik des Bedienelements 22 eine Bewegung des Bedienelements 22 registriert wird und ebenfalls ein entsprechendes Signal an die Steuereinheit 26 gesendet wird. Die Steuereinheit 26 wertet die Signale aus und es erfolgt eine vom Fahrer gewünschte Verstellung des linken Außenspiegels 12.

In einer weiteren Ausführung der Erfindung ist es auch denkbar, dass die Steuereinrichtung zunächst ein Signal über eine Bewegung des Bedienelements 22 erreicht. Erst aufgrund dieses Signals sendet die Steuereinrichtung eine Abfrage über eine mögliche Blickrichtung 18 des Fahrers in Richtung einer der Spiegel 12, 14 des Kraftfahrzeugs 10. Eine vom Fahrer gewünschte Verstellung des in Blickrichtung 18 befindlichen Spiegels 12, 14 wird dann erst in Abhängigkeit von diesem Signal erfolgen.

## Patentansprüche

1. Verfahren zur Verstellung eines Spiegels (12, 14) für ein Kraftfahrzeug (10), wobei
- eine Blickrichtung (18) eines Fahrers mittels wenigstens einer Blickerfassungseinrichtung (20) erfasst wird,
- überprüft wird, ob die Blickrichtung (18) des Fahrers auf den Spiegel (12, 14) gerichtet ist,
- der in der Blickrichtung (18) des Fahrers befindliche Spiegel (12, 14) verstellt wird,
**dadurch gekennzeichnet, dass**
zuerst ein Signal der Blickerfassungseinrichtung (20) von einer Steuereinheit (26) erfasst wird, dass die Blickrichtung (18) des Fahrers auf den Spiegel (12, 14) gerichtet ist, danach eine Abfrage über eine Betätigung eines Bedienelements (22) zum Verstellen des Spiegels (12, 14) erfasst wird, woraufhin nur nach einer positiven Abfrage über eine Betätigung des Bedienelementes (22) eine vom Fahrer gewünschte Verstellung des in der Blickrichtung (18) des Fahrers befindlichen Spiegels (12, 14) erfolgt.

2. Verfahren nach Anspruch 1,
**dadurch gekennzeichnet, dass**
die Blickrichtung (18) des Fahrers durch eine Blickerfassungseinrichtung (20), welche an dem Spiegel (12, 14) angeordnet ist, erfasst wird.

3. Verfahren nach einem der vorangegangenen Ansprüche,
**dadurch gekennzeichnet, dass**
die Blickerfassungseinrichtung (20) als eine Kameraeinrichtung ausgebildet ist, mittels welcher die Blickrichtung (18) des Fahrers erfasst wird.

4. Verfahren nach einem der vorangegangenen Ansprüche,
**dadurch gekennzeichnet, dass**
die Blickrichtung (18) des Fahrers durch mehrere Blickerfassungseinrichtungen (20) erfasst wird.

5. Vorrichtung zur Verstellung eines Spiegels (12, 14) für ein Kraftfahrzeug (10) mit wenigstens einer Blickerfassungseinrichtung (20), welche dazu ausgelegt ist eine Blickrichtung (18) eines Fahrers zu erfassen und zu überprüfen, ob die Blickrichtung (18) des Fahrers auf den Spiegel (12, 14) gerichtet ist und mit einer Steuereinrichtung (26), welche dazu ausgelegt ist, den in der Blickrichtung (18) des Fahrers befindlichen Spiegel (12, 14) zu verstellen,
**dadurch gekennzeichnet, dass**
die Steuereinrichtung (26) dazu ausgelegt ist, zu erfassen, ob zuerst ein Signal der Blickerfassungseinrichtung (20) von der Steuereinheit (26) erfasst worden ist, dass die Blickrichtung (18) des Fahrers auf den Spiegel (12, 14) gerichtet ist, danach eine Abfrage über eine Betätigung eines Bedienelement (22) zum Verstellen des Spiegels (12, 14) erfasst worden ist, und wobei die Steuereinrichtung (26) dazu ausgelegt ist, dass erst nach einer positiven Abfrage über eine Betätigung des Bedienelementes (22) eine vom Fahrer gewünschte Verstellung des in der Blickrichtung (18) des Fahrers befindlichen Spiegels (12, 14) erfolgt.

6. Vorrichtung nach Anspruch 5,
**dadurch gekennzeichnet, dass**
die Blickerfassungseinrichtung (20) an dem Spiegel (12, 14) angeordnet ist.

7. Vorrichtung nach Anspruch 5 und 6,
**dadurch gekennzeichnet, dass**
die Blickerfassungseinrichtung (20) wenigstens eine Kameraeinrichtung umfasst, welche dazu ausgelegt ist, die Blickrichtung (18) des Fahrers zu erfassen.

8. Vorrichtung einem der Ansprüche 5 bis 7,
**dadurch gekennzeichnet, dass**
die Vorrichtung mehrere Blickerfassungseinrichtungen (20) umfasst.

## Claims

1. Process for adjusting a mirror (12, 14) for a motor vehicle (10), wherein,
- one of the driver's directions of view (18) is registered by at least one view registering apparatus (20),
- a check is made whether the driver's direction of view (18) is directed towards the mirror (12, 14),
- the mirror (12, 14) located in the driver's direction of view (18) is adjusted, **characterised in that** firstly a signal from the view registering apparatus (20) that the driver's direction of view (18) is directed towards the mirror (12, 14) is registered by a control unit (26), after which a prompt is registered via activation of an operating element (22) to adjust the mirror (12, 14), whereupon only following a positive prompt by the activation of an operating element (22) an adjustment desired by the driver to the mirror (12, 14) located in the driver's direction of view (18) takes place.

2. Process according to Claim 1, **characterised in that** the direction of view of the driver (18) is registered by a view registering apparatus (20), which is arranged attached to the mirror (12, 14).

3. Process according to one of the above claims **characterised in that** the view registering apparatus (20) is designed as a camera device, by means of which the driver's direction of view (18) is registered.

4. Process according to one of the above claims **characterised in that** the driver's direction of view (18) is recorded by a number of view registering devices (20).

5. Apparatus for adjusting a mirror (12, 14) for a motor vehicle (10) with at least one view registering apparatus (20), which is designed to register a driver's direction of view (18) and to check whether the driver's direction of view (18) is directed towards a mirror (12, 14) and to adjust the mirror (12, 14) with a control apparatus (26), which is designed to adjust the mirror (12, 14) located in the driver's direction of view (18), **characterised in that** the control apparatus (26) is designed to record whether firstly a signal from the direction of registering of view (20) has been registered by the control apparatus (26) that the driver's direction of view (18) is directed towards the mirror (12, 14), after a prompt has been registered via an activation of an operating element (22) for adjusting the mirror (12, 14), and wherein the control unit (26) is designed in such a way that an adjustment of the mirror (12, 14) located in the direction of view of the driver (18) desired by the driver does not take place until after a positive prompt via an activation of the operating element (22).

6. Apparatus according to Claim 5, **characterised in that** the apparatus for registering the direction (20) of view is arranged on the mirror (12, 14).

7. Apparatus according to Claim 5 and 6, **characterised in that** the apparatus for registering the direction (20) of view consists of at least one camera unit which is designed to register the driver's direction of view (18).

8. Apparatus according to one of Claims 5 to 7, **characterised in that** the apparatus consists of a number of devices for registering the view (20).

## Revendications

1. Procédé de réglage d'un rétroviseur (12, 14) pour un véhicule automobile (10), dans lequel
- une direction de regard (18) d'un conducteur est détectée au moyen d'au moins un dispositif de détection de regard (20),
- il est vérifié si la direction de regard (18) du conducteur est orientée sur le rétroviseur (12, 14),
- le rétroviseur (12, 14) situé dans la direction de regard (18) du conducteur est réglé,
**caractérisé en ce que**
un signal du dispositif de détection de regard (20) est tout d'abord détecté par une unité de commande (26), **en ce que** la direction de regard (18) du conducteur est orientée sur le rétroviseur (12, 14), puis une requête d'actionnement d'un élément de commande (22) permettant de régler le rétroviseur (12, 14) est détectée, après quoi un réglage souhaité par le conducteur du rétroviseur (12, 14) situé dans la direction de regard (18) du conducteur n'est réalisé qu'après une requête positive d'actionnement de l'élément de commande (22).

2. Procédé selon la revendication 1,
**caractérisé en ce que**
la direction de regard (18) du conducteur est détectée par un dispositif de détection de regard (20), lequel est agencé sur le rétroviseur (12, 14).

3. Procédé selon l'une quelconque des revendications précédentes,
**caractérisé en ce que**
le dispositif de détection de regard (20) est réalisé sous la forme d'un système de caméra, au moyen duquel la direction de regard (18) du conducteur est détectée.

4. Procédé selon l'une quelconque des revendications précédentes,
**caractérisé en ce que**
la direction de regard (18) du conducteur est détectée par plusieurs dispositifs de détection de regard (20).

5. Dispositif de réglage d'un rétroviseur (12, 14) pour un véhicule automobile (10) comprenant au moins un dispositif de détection de regard (20), lequel est configuré pour détecter une direction de regard (18) d'un conducteur et vérifier si la direction de regard (18) du conducteur est orientée sur le rétroviseur (12, 14) et comprenant un dispositif de commande (26), lequel est configuré pour régler le rétroviseur (12, 14) situé dans la direction de regard (18) du conducteur,
**caractérisé en ce que**
le dispositif de commande (26) est configuré pour détecter si un signal du dispositif de détection de regard (20) a tout d'abord été détecté par l'unité de commande (26), **en ce que** la direction de regard (18) du conducteur est orientée sur le miroir (12, 14), puis si une requête d'actionnement d'un élément de commande (22) pour régler le rétroviseur (12, 14) a été détectée, et dans lequel le dispositif de commande (26) est configuré pour qu'un réglage souhaité par le conducteur du rétroviseur (12, 14) situé dans la direction de regard (18) du conducteur ne soit réalisé qu'après une requête positive d'actionnement de l'élément de commande (22).

6. Dispositif selon la revendication 5,
**caractérisé en ce que**
le dispositif de détection de regard (20) est agencé sur le rétroviseur (12, 14).

7. Dispositif selon la revendication 5 ou 6,
**caractérisé en ce que**
le dispositif de détection de regard (20) comprend au moins un système de caméra, lequel est configuré pour détecter la direction de regard (18) du conducteur.

8. Dispositif selon l'une quelconque des revendications 5 à 7,
**caractérisé en ce que**
le dispositif comprend plusieurs dispositifs de détection de regard (20).
